# FASCICULE DE BREVET EUROPEEN

(11) **EP 2 954 235 B1**
(45) Date de publication et mention de la délivrance du brevet: **04.03.2020**
(21) Numéro de dépôt: 14708598.9
(22) Date de dépôt: 31.01.2014
(51) Int. Cl.: F16H 63/34, F16D 11/10

(54) **BOÎTE DE VITESSES COMPORTANT UN FREIN DE PARKING À CLABOTS**
GETRIEBE MIT EINER PARKBREMSE MIT KLAUEN
GEARBOX COMPRISING A PARKING BRAKE HAVING CLAWS

(30) Priorité: 05.02.2013 FR 1350958
(43) Date de publication de la demande: 16.12.2015
(73) Titulaire: Renault S.A.S., 92100 Boulogne-Billancourt (FR)
(72) Inventeur: GARNIER, Nicolas, 77680 Roissy en Brie (FR)
(86) Numéro de dépôt international: PCT/FR2014/050178
(87) Numéro de publication internationale: WO 2014/122383

(56) Documents cités:
- DE-A1- 10 227 741
- DE-A1-102010 049 276
- JP-A- 2011 106 597
- US-A- 4 310 081

## Description

L'invention concerne une boîte de vitesses de véhicule automobile.

L'invention concerne plus particulièrement une boîte de vitesses de véhicule automobile comportant au moins un arbre qui est lié en rotation à au moins un arbre de sortie de ladite boîte et un dispositif de frein de parking comportant au moins un doigt qui est mobile radialement entre une position inactive et une position active dans laquelle il est reçu dans au moins un cran d'une couronne crantée solidaire en rotation de l'arbre pour immobiliser ledit arbre, ledit arbre recevant au moins un premier élément coaxial solidaire en rotation dudit arbre, qui comporte une portée extérieure présentant des clabots aptes à permettre l'accouplement en rotation dudit premier élément avec au moins un autre deuxième élément de la boîte,

On connaît de nombreux exemples de boîte de vitesses de ce type.

Une telle boîte, notamment lorsqu'elle est du type boîte robotisée ou automatique, doit comporter un dispositif de frein de parking apte à bloquer un arbre qui est en prise directe avec les roues du véhicule, afin de pouvoir immobiliser le véhicule.

Conventionnellement, un tel dispositif comporte à cet effet au moins un doigt, qui est mobile radialement entre une position inactive et une position active dans laquelle il est reçu dans au moins un cran d'une couronne crantée qui est elle-même solidaire en rotation des roues du véhicule par l'intermédiaire d'un arbre de sortie de la boîte, ou qui est directement solidaire dudit arbre de sortie.

Dans toutes les configurations connues de l'état de la technique, tels que les documents JP-A-2011 106597, US-A-4 310 081 et DE-A1-102 27 741, la mise en place du dispositif de frein impose de rajouter à l'axe que l'on désire bloquer une couronne crantée rapportée qui est apte à être bloquée par le doigt dudit dispositif.

L'implantation de cette couronne pose des problèmes d'encombrement et augmente le coût de la boîte, tant du fait des usinages à réaliser pour accueillir la couronne, que des usinages à réaliser pour obtenir la couronne elle-même.

L'invention remédie à cet inconvénient en proposant une boîte du type décrit ci-dessus qui utilise un élément préexistant en lieu et place de la couronne rapportée.

Dans ce but, l'invention propose une boîte de vitesses du type décrit précédemment, caractérisée en ce que le premier élément coaxial constitue la couronne crantée et en ce que les crans sont délimités par les clabots dudit premier élément.

Selon d'autres caractéristiques de l'invention :
- l'arbre reçoit au moins un pignon fou qui est apte à être craboté sur ledit arbre par l'intermédiaire d'un dispositif de crabotage qui comporte au moins un moyeu de l'arbre, accolé au pignon fou, qui reçoit extérieurement en coulissement axial et entraîne en rotation un baladeur, le pignon comportant des clabots entre lesquels des clabots externes du baladeur sont aptes à être reçus pour permettre l'accouplement du pignon fou au moyeu par l'intermédiaire du baladeur, et le doigt du dispositif du frein de parking est apte à coopérer avec les crans délimités par les clabots du baladeur,
- le doigt du dispositif du frein de parking est agencé sensiblement au droit de la position axiale des clabots du baladeur correspondant à une position de repos du baladeur dans laquelle il est désaccouplé du pignon fou.
- le dispositif de frein de parking comporte au moins un levier dont une première extrémité est montée pivotante dans un carter de la boîte de vitesses autour d'un axe parallèle à l'arbre et dont une deuxième extrémité est conformée en un doigt radial de profil correspondant aux clabots du premier élément.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective d'un arbre d'une boîte de vitesses équipé d'un frein de parking selon un état antérieur de la technique,
- la figure 2 est une vue en perspective d'un arbre d'une boîte de vitesses équipé d'un frein de parking selon l'invention,
- la figure 3 est une vue en coupe longitudinale de l'arbre de la figure 2, le frein de parking étant représenté en position inactive,
- la figure 4 est une vue en coupe transversale de l'arbre de la figure 2, le frein de parking étant représenté en position inactive,
- la figure 5 est une vue en coupe longitudinale de l'arbre de la figure 2, le frein de parking étant représenté en position active,
- la figure 6 est une vue en coupe transversale de l'arbre de la figure 2, le frein de parking étant représenté en position active.

Dans la description qui va suivre, les chiffres de référence identiques désignent des pièces identiques ou ayant des fonctions similaires.

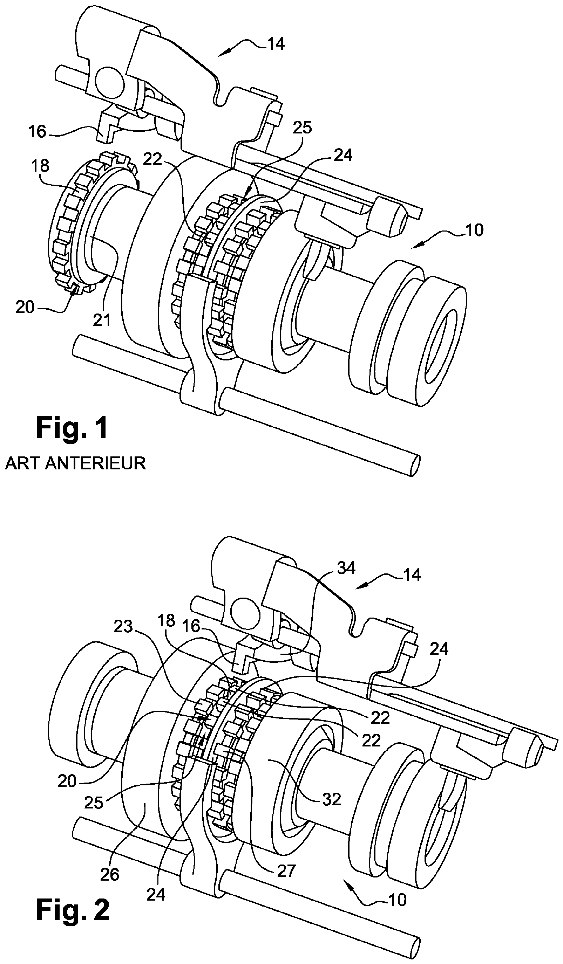

On a représenté sur les figures 1 à 6 un arbre 10 d'une boîte de vitesses de véhicule automobile (non représentée). De manière connue, une telle boîte, notamment lorsqu'elle du type boîte robotisée ou automatique, doit comporter un dispositif de frein de parking apte à bloquer un arbre en prise directe avec les roues du véhicule, afin de pouvoir immobiliser le véhicule de manière redondante avec le frein de parking du véhicule.

A cet effet, l'arbre 10, pour peu qu'il soit lié en rotation à un arbre de sortie de la boîte solidaire des roues du véhicule associé, ou qu'il soit constitué lui-même de cet arbre de sortie, doit porter des crans 12 dans lesquels un élément d'immobilisation peut être introduit radialement pour bloquer l'arbre.

Dans ce but, comme l'illustre la figure 1, une telle boîte comporte conventionnellement un dispositif 14 de frein de parking qui comporte au moins un doigt 16 qui est mobile radialement entre une position inactive représentée à la figure 1, et une position active (non représentée), dans laquelle il est reçu dans au moins un cran 18 d'une couronne 20 portée par l'arbre 10.

Conventionnellement, la couronne 20 est soit réalisée dans l'arbre 10, et nécessite en ce cas des usinages spécifiques de l'arbre 10, soit elle est constituée d'une couronne 20 rapportée qui est reçue sur une portée 21 de l'arbre 10, comme représenté à la figure 1.

Dans ce dernier cas, la portée 21 de réception de la couronne 20 nécessite elle aussi des usinages spécifiques. C'est aussi le cas des crans 18 de la couronne 20.

Ainsi, outre l'encombrement axial de la couronne 20, les usinages qui y sont liés grèvent le coût de fabrication d'un tel arbre 10.

L'invention remédie à cet inconvénient en proposant une boîte utilisant un élément préexistant en lieu et place de la couronne rapportée.

A cet effet, comme l'illustre la figure 2, l'arbre 10 choisi pour implanter le dispositif 14 de frein de parking est de préférence un arbre 10 qui reçoit par ailleurs au moins un premier élément coaxial 24 solidaire en rotation dudit arbre, qui comporte une portée extérieure 25 présentant des clabots 22 aptes à permettre l'accouplement en rotation dudit premier élément 24 avec au moins un autre deuxième élément 26 de la boîte, par exemple un baladeur 24 formant le premier élément apte â être accouplé à un pignon fou 26 formant le deuxième élément.

Conformément à l'invention, le premier élément coaxial 24 comporte la couronne crantée 20 et les crans 18 sont délimités par les clabots 22 dudit premier élément 24.

Comme l'illustre la figure 2 qui constitue un mode de réalisation préféré de l'invention, l'arbre 10 reçoit au moins un pignon fou 26 qui est apte à être craboté sur ledit arbre 10 par l'intermédiaire d'un dispositif de crabotage 28.

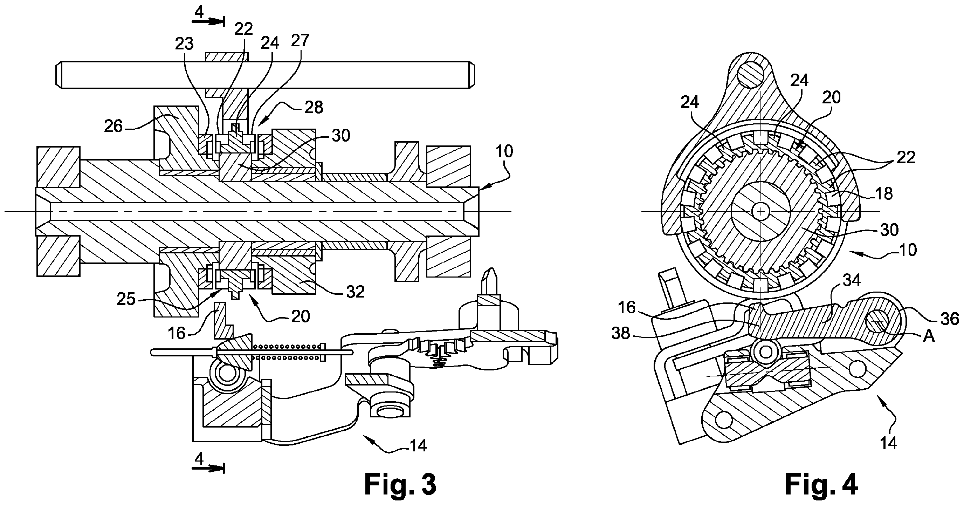

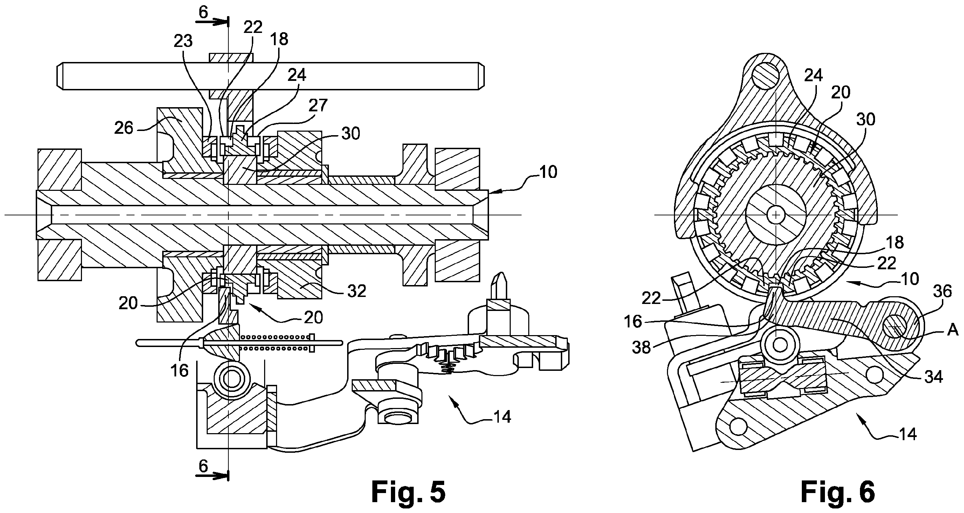

Comme l'illustrent les figures 3 et 5, le dispositif 28 de crabotage comporte au moins un moyeu 30 de l'arbre 10, accolé au pignon fou 26, qui reçoit extérieurement en coulissement axial et entraîne en rotation un baladeur 24, le pignon 26 comportant des clabots 23 entre lesquels des clabots externes 22 du baladeur 24 sont aptes à être reçus pour permettre l'accouplement du pignon fou 26 au moyeu 30 par l'intermédiaire du baladeur 24. Le doigt 16 du dispositif 14 du frein de parking est apte à coopérer avec les crans 18 délimités par les clabots 22 du baladeur 24.

Comme représenté aux figures 3 et 5, de manière non limitative de l'invention, le baladeur 24 est un baladeur axial mobile selon deux directions opposées pour assurer le crabotage du pignon fou 26 ou d'un pignon fou opposé 32. A cet effet, le baladeur comporte deux jeux opposés de clabots 22 et 27.

Le doigt 16 du dispositif 14 du frein de parking est apte à coopérer avec les crans 18 délimités par une des deux séries de clabots 22 du baladeur 24.

Il sera compris que pour permettre l'introduction du doigt 16, le doigt 16 du dispositif du frein 14 de parking doit préalablement être agencé sensiblement au droit de la position axiale des clabots 22 du baladeur correspondant à une position de repos du baladeur 24 dans laquelle il est désaccouplé du pignon fou 26, comme représenté aux figures 2, 3 et 5. Puis le doigt 16 est introduit entre les clabots 22, comme représenté aux figures 5 et 66.

Cette configuration permet avantageusement d'interdire l'enclenchement du doigt 16 du dispositif 14 de frein de parking lorsque le baladeur 24 est déplacé de sa position de repos et est craboté avec le pignon fou 26 pour transmettre une puissance motrice à l'arbre 10. Ceci permet d'éviter la détérioration dispositif 14 de frein de parking.

De manière connue, comme représenté aux figures 4 et 6, le dispositif 14 de frein de parking comporte au moins un levier 34 dont une première extrémité 36 est montée pivotante autour d'un axe "A" parallèle à l'arbre 10 dans un carter (non représenté) de la boîte de vitesses et dont une deuxième extrémité 38 comporte le doigt radial 16.

Il sera compris que dans ce cas le profil du doigt 16 sera particulièrement adapté pour correspondre aux crans 18 délimités par les clabots 22 du premier élément 24.

L'invention permet donc d'équiper une boîte de vitesses d'un dispositif 14 de frein de parking à moindre coût.

## Revendications

1. Boîte de vitesses de véhicule automobile comportant au moins un arbre (10) qui est lié en rotation à au moins un arbre de sortie de ladite boîte et un dispositif (14) de frein de parking comportant au moins un doigt (16) qui est mobile radialement entre une position inactive et une position active dans laquelle il est reçu dans au moins un cran (18) d'une couronne (20) crantée solidaire en rotation de l'arbre (10) pour immobiliser ledit arbre (10),
ledit arbre (10) recevant au moins un premier élément (24) coaxial solidaire en rotation dudit arbre, qui comporte une portée (25) extérieure présentant des clabots (22) aptes à permettre l'accouplement en rotation dudit premier élément (24) avec au moins un autre deuxième élément (26) de la boîte,
**caractérisée en ce que** le premier élément coaxial (24) comporte la couronne crantée (20) et ce que les crans (18) sont délimités par les clabots (22) dudit premier élément (24).

2. Boîte de vitesses selon la revendication précédente, **caractérisée en ce que** l'arbre (10) reçoit au moins un pignon fou (26) qui est apte à être craboté sur ledit arbre (10) par l'intermédiaire d'un dispositif de crabotage qui comporte au moins un moyeu (30) de l'arbre (10), accolé au pignon fou (26), qui reçoit extérieurement en coulissement axial et entraîne en rotation un baladeur (24), le pignon (26) comportant des clabots entre lesquels des clabots externes (22) du baladeur sont aptes à être reçus pour permettre l'accouplement du pignon fou (26) au moyeu (30) par l'intermédiaire du baladeur (24), et **en ce que** le doigt (18) du dispositif (14) du frein de parking est apte à coopérer avec les crans (18) délimités par les clabots (22) du baladeur (24).

3. Boite de vitesses selon la revendication précédente, **caractérisée en ce que** le doigt (16) du dispositif (14) du frein de parking est agencé sensiblement au droit de la position axiale des clabots (22) du baladeur (24) correspondant à une position de repos du baladeur (24) dans laquelle il est désaccouplé du pignon fou (26).

4. Boîte de vitesses selon l'une des revendications précédente, **caractérisée en ce que** le dispositif de frein de parking (14) comporte au moins un levier (34) dont une première extrémité (36) est montée pivotante dans un carter de la boîte de vitesses autour d'un axe "A" parallèle à l'arbre et dont une deuxième extrémité (38) est conformée en un doigt radial (18) de profil correspondant aux crans délimités par les clabots (22) du premier élément (24).

## Patentansprüche

1. Getriebe eines Kraftfahrzeugs, welches wenigstens eine Welle (10), welche mit wenigstens einer Abtriebswelle des Getriebes drehfest verbunden ist, und eine Parkbremsvorrichtung (14) aufweist, die wenigstens einen Finger (16) aufweist, welcher radial beweglich ist zwischen einer inaktiven Position und einer aktiven Position, in welcher er in wenigstens einer Raste (18) eines mit der Welle (10) drehfest verbundenen Zahnkranzes (20) aufgenommen ist, um die Welle (10) zu arretieren, wobei die Welle (10) wenigstens ein koaxiales, mit dieser Welle drehfest verbundenes erstes Element (24) aufnimmt, das eine äußere tragende Fläche (25) aufweist, welche Klauen (22) aufweist, die in der Lage sind, die drehfeste Kupplung des ersten Elements (24) mit wenigstens einem weiteren, zweiten Element (26) des Getriebes zu ermöglichen,
**dadurch gekennzeichnet, dass** das koaxiale erste Element (24) den Zahnkranz (20) aufweist, und dadurch, dass die Rasten (18) von den Klauen (22) des ersten Elements (24) begrenzt werden.

2. Getriebe nach dem vorhergehenden Anspruch, **dadurch gekennzeichnet, dass** die Welle (10) wenigstens ein freilaufendes Ritzel (26) aufnimmt, welches auf der Welle (10) durch eine Formschlusskupplungsvorrichtung formschlüssig arretierbar ist, welche wenigstens eine an das freilaufende Ritzel (26) angrenzende Nabe (30) der Welle (10) aufweist, welche außen ein Schieberad (24) axial verschiebbar aufnimmt und drehend antreibt, wobei das Ritzel (26) Klauen aufweist, zwischen denen äußere Klauen (22) des Schieberades aufgenommen werden können, um die Kupplung des freilaufenden Ritzels (26) mit der Nabe (30) durch das Schieberad (24) zu ermöglichen, und dadurch, dass der Finger (18) der Parkbremsvorrichtung (14) geeignet ist, mit den Rasten (18) zusammenzuwirken, die von den Klauen (22) des Schieberades (24) begrenzt werden.

3. Getriebe nach dem vorhergehenden Anspruch, **dadurch gekennzeichnet, dass** der Finger (16) der Parkbremsvorrichtung (14) im Wesentlichen genau gegenüber der axialen Position der Klauen (22) des Schieberades (24) angeordnet ist, die einer Ruheposition des Schieberades (24) entspricht, in welcher es von dem freilaufenden Ritzel (26) ausgekuppelt ist.

4. Getriebe nach einem der vorhergehenden Ansprüche, **dadurch gekennzeichnet, dass** die Parkbremsvorrichtung (14) wenigstens einen Hebel (34) aufweist, von dem ein erstes Ende (36) in einem Gehäuse des Getriebes um eine zu der Welle parallele Achse "A" schwenkbar gelagert ist, und von dem ein zweites Ende (38) als ein radialer Finger (18) mit einem Profil ausgebildet ist, das den Rasten entspricht, die von den Klauen (22) des ersten Elements (24) begrenzt werden.

## Claims

1. Gearbox of a motor vehicle comprising at least one shaft (10) which is rotatably connected to at least one first output shaft of said gearbox, and a parking brake device (14) comprising at least one finger (16) which is radially moveable between an inoperative position and an operative position in which it is received in at least one notch (18) of a notched ring (20) which is rotationally fixed to the shaft (10) in order to immobilize said shaft (10),
said shaft (10) receiving at least one first coaxial element (24) which is rotationally fixed to said shaft and comprises an outer bearing (25) with claws (22) able to allow the rotational coupling of said first element (24) with at least one other second element (26) of the gearbox, **characterized in that** the first coaxial element (24) comprises the notched ring (20) and **in that** the notches (18) are delimited by the claws (22) of said first element (24).

2. Gearbox according to the preceding claim, **characterized in that** the shaft (10) receives at least one idle pinion (26) which is able to be claw-coupled to said shaft (10) via a claw-coupling device comprising at least one hub (30) of the shaft (10), which is attached to the idle pinion (26) and on the outside receives a sliding shaft (24) with axial sliding and drives said sliding shaft in rotation, the pinion (26) comprising claws between which the outer claws (22) of the sliding shaft are able to be received in order to allow the coupling of the idle pinion (26) to the hub (30) via the sliding shaft (24), and **in that** the finger (18) of the parking brake device (14) is able to cooperate with the notches (18) delimited by the claws (22) of the sliding shaft (24).

3. Gearbox according to the preceding claim, **characterized in that** the finger (16) of the parking brake device (14) is arranged substantially level with the axial position of the claws (22) of the sliding shaft (24), corresponding to a rest position of the sliding shaft (24) in which it is decoupled from the idle pinion (26).

4. Gearbox according to any of the preceding claims, **characterized in that** the parking brake device (14) comprises at least one lever (34), a first end (36) of which is mounted pivoting in a casing of the gearbox around an axis "A" parallel to the shaft, and a second end (38) of which is shaped as a radial finger (18) of profile corresponding to the notches delimited by the claws (22) of the first element (24).
